(19) Europäisches Patentamt / European Patent Office / Office européen des brevets

(11) **EP 2 816 832 B1**

(12) **EUROPEAN PATENT SPECIFICATION**

(45) Date of publication and mention
of the grant of the patent:
**09.08.2017 Bulletin 2017/32**

(51) Int Cl.:
**H04W 16/06** *(2009.01)*    **H04W 16/32** *(2009.01)*

(21) Application number: **13305843.8**

(22) Date of filing: **21.06.2013**

(54) **Heterogeneous network**

Heterogenes Netzwerk

Réseau hétérogène

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.12.2014 Bulletin 2014/52**

(73) Proprietor: **ALCATEL LUCENT
92100 Boulogne-Billancourt (FR)**

(72) Inventors:
• **Claussen, Holger
Dublin, 15 (IE)**
• **Lopez-Perez, David
Dublin, 15 (IE)**

(74) Representative: **Sarup, David Alexander et al
Alcatel-Lucent Telecom Ltd
Intellectual Property Business Group
Christchurch Way
Greenwich
London SE10 0AG (GB)**

(56) References cited:
EP-A1- 2 590 442    US-A1- 2012 188 884
US-A1- 2013 044 600    US-A1- 2013 045 740
US-A1- 2013 084 864    US-A1- 2013 109 384

• QUALCOMM EUROPE: "Range expansion for
efficient support of heterogeneous networks",
3GPP DRAFT; R1-083813, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, no. Prague, Czech Republic;
20080924, 24 September 2008 (2008-09-24),
XP050317137, [retrieved on 2008-09-24]

**Description**

FIELD OF THE INVENTION

The present invention relates to a method of controlling operation of a heterogeneous wireless communication network, a computer program product and network control node operable to perform that method. Also provided is a method of scheduling resource at a small cell base station in a heterogeneous wireless communication network, a computer program product and scheduling control unit operable to perform that method.

BACKGROUND

Wireless telecommunication systems are known. In such systems, mobile communication devices (for example, mobile telephones) are operable to communicate with base stations provided by network providers.

In known wireless telecommunication systems, radio coverage is provided to network connectable devices, such as mobile telephones, or wireless devices such as iPads or other similar tablets, within areas known as cells. A base station is located in each cell to provide radio coverage. Typically, network connectable devices in each cell are operable to receive information and data from a base station and to transmit information and data to a base station.

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

Traditional base stations provide coverage in relatively large geographical areas and those cells are often referred to as macro cells. It is possible to provide a heterogeneous network (hetnet) where smaller sized cells are provided within macro cells. Such smaller sized cells are sometimes referred to as micro cells, pico cells or femto cells.

One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells operating to use the same frequency band as a macro cell are typically provided where the communications coverage provided by the macro cell is poor or where a user wishes to use an alternative communications link provided locally, by the small cell base station, to communicate with the core network, and/or to increase capacity within a network.

Although the deployment of such small cell base stations can provide advantages, unexpected consequences can occur.

Accordingly, it is desired to provide an improved technique for the operation of heterogeneous networks.

US 2012/188884 discloses a method of establishing an offset for selection of a cell in a HetNet, in which range expansion bias calculations are discussed. When a small cell range expansion bias is larger than a threshold the macro cell will start blanking some resources for interference mitigation.

US2013/045740 discloses a method where cell association bias is applied along with inter cell interference coordination using ABS (almost blank subframes) scheduling. The macrocell schedules a number of ABSs, and if the underlying small cell feels that it cannot schedule all its expanded region users with the appropriate performance it will request the macrocell for more ABSs. Upon receiving such request, the macrocell will ACK or NACK such a request.

SUMMARY

A first aspect provides a method of controlling operation of a heterogeneous communication network comprising user equipment, a macro cell base station supporting a macro region of radio coverage and at least one small cell base station supporting a small cell region of radio coverage which overlaps with said macro region of radio coverage, said user equipment being operable to communicate with either of said macrocell base station and said at least one small cell base station and wherein said macrocell is operable to release a proportion of available resource for facilitating communication between said user equipment and said at least one small cell base station; said method comprising: determining which of said user equipment are attached to said macro base station in a first scenario in which said macro base station and small cell base station reuse the same available time and frequency resource and establishing an indication of said available resource available to user equipment attached to said macro cell base station in said first scenario; determining which of said user equipment are attached to said macro base station in a second scenario in which some of said user equipment have been offloaded to said at least one small cell base station and selecting a proportion of said available resource to release by said macro cell base station for facilitating communication between said offloaded user equipment and said at least one small cell base station such that available resource available to user equipment which remains attached to said macro cell base station in said second scenario is at least equivalent to the established indication of said available resource available to user equipment attached to said macro cell base station in said first scenario.

As described above, traditional base stations provide coverage in relatively large geographical areas and those cells are often referred to as macro cells. It is possible to provide a heterogeneous network (hetnet) where smaller sized cells, typically supported by low power nodes, are provided within macro cells. Such smaller sized cells are sometimes also referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network. That is to say, in a heterogeneous network, small cells supported by "Low Power Nodes" (LPN) can be placed within a macro cell supported by a macro base station to increase the capacity of the network by offloading some user equipment operating within the macro cell to one of the small cells.

Due to the large difference in transmit power between small cell base stations, for example, a pico base station (30 dBm), and a macro base station (43 dBm), the closer a small cell base station is to a macro base station, the smaller its Downlink (DL) coverage becomes. That is to say, the area in which the pico base station provides a dominant DL Received Signal Strength (RSS) shrinks. The effective shrinking may prevent efficient off-loading. In the Uplink (UL), such coverage shrinking does not occur because the UL RSSs from user equipment at different base stations typically depend on user equipment transmit power. This leads to a mismatch between the DL and UL small cell base station coverage.

The DL and UL coverage imbalance can mean that associating user equipment with the cell that provides the strongest downlink received signal strength may not always be the best strategy, since user equipment can tend to connect to a potentially distant high-power macro base station rather than to a nearby low-power small cell base station, thus potentially wasting an opportunity to offer efficient spatial reuse within a network.

Furthermore, a downlink received signal strength (DL RSS) based cell selection procedure can result in user equipment which are connected to a distant macro base station causing interference to uplink communication occurring at nearby small cell base stations.

Cell range expansion is one cell selection procedure which maybe implemented in a network to allow, or force, user equipment to connect to nearby small cell nodes. In particular, a positive range expansion bias can be added to the DL RSSs of a small cell pilot signal to artificially increase the DL coverage footprint provided by such a small cell base station. However, the better spatial reuse and UL interference mitigation offered by cell range expansion comes at the expense of reduced DL signal qualities for user equipment operating in the "Expanded-Region" (ER). Small cell user equipment operating in the expanded region may suffer from low DL Signal-to-Interference-plus-Noise Ratios (SINRs), since they are connected to cells which do not provide the strongest DL RSSs in the expanded region and therefore are more susceptible to suffer from interference.

The interference suffered by expanded region user equipment may be significantly alleviated by using a time domain enhanced Inter-Cell Interference Coordination (eICIC) method based on transmission of so-called "Almost Blank Subframes"(ABSs) by one or more macro cell base stations. Almost Blank Subframes are subframes, in which control information, but no user data, is sent. Since ABSs are light on user data, a large degree of DL interference mitigation can be achieved in the control and data regions of user equipment operating in an expanded region of a small cell base station by scheduling those expanded region user equipment within subframes overlapping with the Almost Blank Subframes of a macrocell. In order to enable efficient interference mitigation, ABS schemes can be implemented to adapt to different traffic loads and different numbers of small cells in a network, for example, at various geographical locations. Adaptive ABS schemes can be implemented in LTE networks and are enabled through X2 backhaul inter-base station coordination.

According to one example of an ABS scheme, a macro base station may be operable to inform one or more small cell base stations operating within its region of radio coverage of the subframes it will use for scheduling Macro UEs (MUEs) and which ones are Almost Blank Subframes. The specific ABS pattern to be used can be agreed in conjunction with macro base stations supporting neighboring cells. The ABS pattern may be described by a bitmap, where '1' indicates an Almost Blank Subframe and '0' indicates a non- Almost Blank Subframe.

The larger the range expansion bias for a given small cell base station in a given position within a network, the more expanded region user equipment are forced to connect to such a small cell base station, and thus a larger ABS duty cycle can be implemented to provide a desired quality of service to expanded region user equipment. It will, however, be appreciated that the larger the duty cycle of ABS, the lower the performance of macro cell user equipment due to resource blanking.

Aspects and embodiments may offer a method of choosing an appropriate ABS duty cycle, that is to say, a means to choose an appropriate ratio of ABS to non-ABS subframes scheduled at the macro cell, that ratio being chosen to take into account overall network performance for a given network. The "best" ratio for a given deployment being a result of parameters such as: base station locations, cell-specific range expansion biases, and similar.

Aspects and embodiments may provide a method to compute the number of Almost Blank Subframes that an umbrella macrocell should offer to its overlaid small cells, so that the performance of macro cell user equipment in a scenario with expanded region small cells is substatially the same, or controllably larger than, performance of macro cell user equipment in the same network deployment scenario without expanded region small cells. In order to make the most of the Almost Blank Subframes that the macrocells offer to small cells, some aspects and embodiments are such that each small cell base station, in each scheduling period, can perform load balanced scheduling such that the performance of the worst small cell users scheduled in subframes that do and do not overlap with the Almost Blank Subframes of the macrocell are equalized.

The first aspect recognizes that it is possible to provide a method to compute the number of ABSs that an umbrella macrocell should offer to its overlaid small cells, given a specific set of range expanded small cells in a network deployment, such that the performance of the user equipment served by a macro cell in the scenario where users have been offloaded to small cells is the same or controllably larger than the performance of user equipment served by a macrocell in a scenario in which no range expansion is implemented. Aspects and embodiments may offer an improved overall network throughput due to better spatial reuse.

It will be appreciated that the second scenario may be one in which small cell base stations are able to offer coverage to user equipment in a network as a result of implementation of a cell expansion region at one or more of said small cell base stations. Accordingly, in the second scenario, although the total number of user equipment operating in the network under consideration may remain constant, the number of macro user equipment is likely to fall as some are offloaded to small cells. It will be appreciated that if no user equipment are offloaded to small cells when comparing the first scenario to the second scenario, then no change to a proportion of resource offered to small cells to support offloaded user equipment may be required.

In one embodiment, the released proportion of available resource comprises almost blank subframes transmitted by the macro base station, thereby releasing those subframes for use by the at least one small cell base station. Accordingly, the method may be such that it provides a means to compute the number of ABSs that an umbrella macrocell should offer to its overlaid small cells, given a set of range expanded small cells in a particular network deployment.

In one embodiment, the released proportion of available resource comprises reduced power subframes transmitted by the macro base station, thereby releasing those subframes for use by the at least one small cell base station.

In one embodiment, establishing an indication of the available resource available to user equipment attached to the macro cell base station in the first scenario and available resource available to user equipment which remains attached to the macro cell base station in the second scenario comprises: establishing an indication of available resource to traffic load of the macro cell user equipment. Accordingly, some aspects and embodiments may be used to realise a calculation of an appropriate duty cycle of almost blank subframes which takes into account specific user equipment traffic demands.

In a typical network deployment, all macrocells in a set of neighbouring macrocells are operable to use the same duty cycle and pattern of almost blank subframes ($D_{ABS}$), in order to mitigate inter-cell interference issues. As a result, in some embodiments, a set of macrocells may be operable to coordinate and select a shared duty cycle and pattern of ABSs according to a group policy, for example, a choice may be made as, for example: the maximum $D_{ABS}$ of all macrocells, or the average $D_{ABS}$ of all macrocells in a group.

A second aspect provides a computer program product operable, when executed on a computer, to perform the method of the first aspect.

A third aspect provides a network control node operable to control operation of a heterogeneous communication network comprising user equipment, a macro cell base station supporting a macro region of radio coverage and at least one small cell base station supporting a small cell region of radio coverage which overlaps with said macro region of radio coverage, said user equipment being operable to communicate with either of said macrocell base station and said at least one small cell base station and wherein said macrocell is operable to release a proportion of available resource for facilitating communication between said user equipment and said at least one small cell base station; said network control node comprising: determination logic operable to determine which of said user equipment are attached to said macro base station in a first scenario in which said macro base station and small cell base station reuse the same available time and frequency resource and to establish an indication of said available resource available to user equipment attached to said macro cell base station in said first scenario; said determination logic being further operable to determine which of said user equipment are attached to said macro base station in a second scenario in which some of said user equipment have been offloaded to said at least one small cell base station and selection logic operable to select a proportion of said available resource to release for facilitating communication between said offloaded user equipment and said at least one small cell base station such that available resource available to user equipment which remains attached to said macro cell base station in said second scenario is at least equivalent to the established indication of said available resource available to user equipment attached to said macro cell base station in said first scenario.

In one embodiment, the released proportion of available resource comprises almost blank subframes transmitted by the macro base station, thereby releasing those subframes for use by the at least one small cell base station.

In one embodiment, the released proportion of available resource comprises reduced power subframes transmitted by the macro base station, thereby releasing those subframes for use by the at least one small cell base station.

In one embodiment, establishing an indication of the available resource available to user equipment attached to the macro cell base station in the first scenario and available resource available to user equipment which remains attached to the macro cell base station in the second scenario comprises: establishing an indication of available resource to traffic load of the macro cell user equipment.

A further technique provides a method of scheduling resource at a small cell base station in a heterogeneous wireless communication network comprising user equipment, a macro cell base station supporting a macro region of radio coverage and at least one small cell base station supporting a small cell region of radio coverage which overlaps with the macro region of radio coverage, the user equipment being operable to communicate with either of the macro cell base station or the at least one small cell base station and wherein the macrocell is operable to release a proportion of available resource for facilitating communication between the user equipment and the at least one small cell base station; the small cell base station being configured to support communication with the user equipment in a first communication mode using all of the available resource or a second communication mode using said released portion of available resource; the method comprising: receiving an indication of signal quality at the user equipment in resource used for the first and second communication modes; associating the user equipment with one of the first or second communication modes such that throughput of a worst user associated with the first communication mode is substantially equivalent to throughput of a worst user associated with the second communication mode; and scheduling resource to the user equipment in the first or second communication mode in accordance with the association.

The further technique recognises that in order to make the most of resource offered to a small cell by a macrocell for users in an expansion region, for example, by setting Almost Blank Subframes at the macrocell, which allows those subframes to be offered to small cells, some aspects and embodiments are such that each small cell base station, in each scheduling period, can perform a load balanced scheduling method such that the performance of the worst small cell users scheduled in subframes that do and do not overlap with the Almost Blank Subframes of the macrocell are equalized.

User equipment load and traffic conditions may change faster than the ability of a network to update the duty cycle of ABS in a given deployment. Furthermore, different small cells operating under one umbrella macrocell may have different UE load and traffic in their core or "nominal" coverage region and expanded region of coverage.

Accordingly, some techniques described herein relate to a load balancing mechanism that can operate independently in each small cell. The load balancing mechanism may target avoidance of the misuse, be it underutilization or overutilization, of the subframes used by the small cells in their "expansion region". That is to say, those subframes which overlap with the Almost Blank Subframes scheduled at macrocells.

In one case, the method comprises associating user equipment with one of the first or second communication modes such that throughput of a worst user associated with the first communication mode is substantially equivalent to throughput of a worst user associated with the second communication mode by: receiving an indication of signal to interference and noise ratio experienced at user equipment in resource used for the first and second communication modes; creating an initial association with a communication mode for each user equipment based on the received indication; identifying a worst user of each communication mode based on the initial association; estimating a throughput associated with each worst user based on the initial association; calculating how many users should be associated with each of the first communication modes based on the estimated throughput associated with each worst user; and adjusting the initial association until a number of users associated with each of the first and second communication modes corresponds to the calculation.

In one case, the adjusting comprises: adjusting by moving user equipment associated with one communication mode which has a high reported signal to noise and interference ratio in resource associated with the other communication mode to be associated with that other communication mode.

In one case, the first communication mode is associated with a core region of small cell base station radio coverage and the second communication mode is associated with an extension region of small cell base station radio coverage. In other words, a small cell may choose to implement a scheme which offers a degree of load balancing between so-called core region and expansion region user equipment.

In one case, associating a user with the first communication mode is subject to that user having a wideband signal quality determined to be higher than an out-of-synchronization threshold value. Accordingly, in such an implementation of load balancing, it is important to ensure that offloaded user equipment, for example, from subframes overlapping with ABS to subframes not overlapping with ABS do not suffer from such poor control channel performance that they lose synchronization with the serving small cell.

In one case, associating user equipment with one of the first or second communication modes is performed such that throughput of an average user associated with the first communication mode is substantially equivalent to throughput of an average user associated with the second communication mode.

In one case, associating user equipment with one of the first or second communication modes is performed such that throughput of the median user associated with the first communication mode is substantially equivalent to throughput of the median user associated with the second communication mode.

A computer program product operable, when executed on a computer, to perform the method of the further technique is disclosed.

Yet a further technique provides a scheduling unit operable to schedule resource at a small cell base station in a heterogeneous wireless communication network comprising user equipment, a macro cell base station supporting a macro region of radio coverage and at least one small cell base station supporting a small cell region of radio coverage which overlaps with the macro region of radio coverage, the user equipment being operable to communicate with either of the macrocell base station or the at least one small cell base station and wherein the macrocell is operable to release a proportion of available resource for facilitating communication between the user equipment and the at least one small cell base station; the small cell base station being configured to support communication with the user equipment in a first communication mode using all of the available resource or a second communication mode using the released portion of available resource; the scheduling unit comprising: reception logic operable to receive an indication of signal quality at the user equipment in resource used for the first and second communication modes; association logic operable to associate user equipment with one of the first or second communication modes such that throughput of a worst user associated with the first communication mode is substantially equivalent to throughput of a worst user associated with the second communication mode; and scheduling logic operable to schedule resource to the user equipment in the first or second communication mode in accordance with the association.

In one case, the association logic is operable to associate user equipment with one of the first or second communication modes such that throughput of a worst user associated with the first communication mode is substantially equivalent to throughput of a worst user associated with the second communication mode by: receiving an indication of signal to interference and noise ratio experienced at user equipment in the resource used in the first and second communication modes; creating an initial association for each user equipment based on the received indication; identifying a worst user of each communication mode based on the initial association; estimating a throughput associated with each worst user based on the initial association; calculating how many users should be associated with each of the first and second communication modes based on the estimated throughput associated with each worst user; and adjusting the initial association until a number of users associated with each of the first and second communication modes corresponds to the calculation.

In one case, the adjusting comprises: adjusting by moving user equipment associated with one communication mode which has a high reported signal to noise and interference ratio in resource used in the other communication mode to be associated with that other communication mode.

In one case, the first communication mode is associated with a core region of small cell base station radio coverage and the second communication mode is associated with an extension region of small cell base station radio coverage.

In one case, the association logic is operable to associate a user with the first communication mode subject to that user having a wideband signal quality determined to be higher than an out-of-synchronization threshold value.

In one case, the association logic is operable to associate the user equipment with one of the first or second communication modes such that throughput of an average user associated with the first communication mode is substantially equivalent to throughput of an average user associated with the second communication mode.

In one case, the association logic is operable to associate the user equipment with one of the first or second communication modes such that throughput of the median user associated with said first communication mode is substantially equivalent to throughput of the median user associated with said second communication mode. Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates an example of an Almost Blank Subframe implementation between a macrocell and a small cell;
Figure 2 illustrates an example of a heterogeneous network in which range expansion is not implemented;
Figure 3 illustrates an example of a heterogeneous network in which range expansion and user offloading is implemented;
Figure 4 is a flow chart illustrating one possible implementation of a load balancing algorithm to be implemented by a small cell;
Figure 5 illustrates an example of wideband SINR of a set of base stations used for system level simulations of some aspects and embodiments;
Figure 6 illustrates schematically macrocell user equipment throughput in one network deployment according to a range of simulations;
Figure 7 illustrates schematically small cell user equipment throughput in one network deployment according to a range of simulations; and
Figure 8 illustrates schematically overall user equipment throughput in one network deployment according to a range of simulations.

DESCRIPTION OF THE EMBODIMENTS

Wireless telecommunication systems are known. In such systems, mobile communication devices, for example, mobile telephones, are operable to communicate with base stations provided by network providers.

In known wireless telecommunication systems, radio coverage is provided to network connectable devices according to areas known as cells. A base station is located in each cell to provide radio coverage. Typically, user devices in each cell are operable to receive information and data from a base station and to transmit information and data to a base station.

User equipment roam through a wireless communications system. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links. Each base station typically supports a number of sectors within the geographical area of service. Typically, a different antenna within a base station supports each associated sector. Each base station has multiple antennas.

Traditional base stations provide coverage in relatively large geographical areas and those cells are often referred to as macro cells. It is possible to provide a heterogeneous network (hetnet) where smaller sized cells, sometimes referred to as low power nodes, are provided within macro cells. Such smaller sized cells are sometimes also referred to as micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network. That is to say, in a heterogeneous network, small cells or "Low Power Nodes" (LPN) can be placed within a macro cell supported by a macro base station to increase the capacity of the network by offloading some user equipment operating within the macro cell to one of the low power nodes.

Due to the large difference in transmit power between small cell base stations, for example a pico base station (30 dBm) and a macro base station (43 dBm), the closer a small cell base station is to a macro base station, the smaller its Downlink (DL) coverage becomes. That is to say, the area in which the pico base station provides a dominant DL Received Signal Strength (RSS) shrinks. The effective shrinking may prevent efficient off-loading. In the Uplink (UL), such coverage shrinking does not occur because the UL RSSs from user equipment at different base station s typically depend on user equipment transmit power. This leads to a mismatch between the DL and UL small cell base station coverage.

The DL and UL coverage imbalance can mean that associating user equipment with the cell that provides the strongest downlink received signal strength may not always be the best strategy, since user equipment can tend to connect to a potentially distant high-power macro base station rather than to a nearby low-power small cell base station, thus potentially wasting an opportunity to offer efficient spatial reuse within a network.

Furthermore, a downlink received signal strength (DL RSS) based cell selection procedure, can result in user equipment which are connected to a distant macro base station causing interference to uplink communication occurring at nearby small cell base stations.

Cell range expansion is one cell selection procedure which maybe implemented in a network to allow, or force, user equipment to connect to nearby small cell nodes. In particular, a positive range expansion bias can be added to the DL RSSs of a small cell pilot signal to artificially increase the DL coverage footprint provided by such a small cell base station. However, the better spatial reuse and UL interference mitigation offered by cell range expansion comes at the expense of reduced DL signal qualities for user equipment operating in the "Expanded-Region" (ER). Small cell user equipment operating in the expanded region may suffer from low DL Signal-to-Interference-plus-Noise Ratios (SINRs), since they are connected to cells which do not provide the strongest DL RSSs in the expanded region and therefore are more susceptible to suffer from interference.

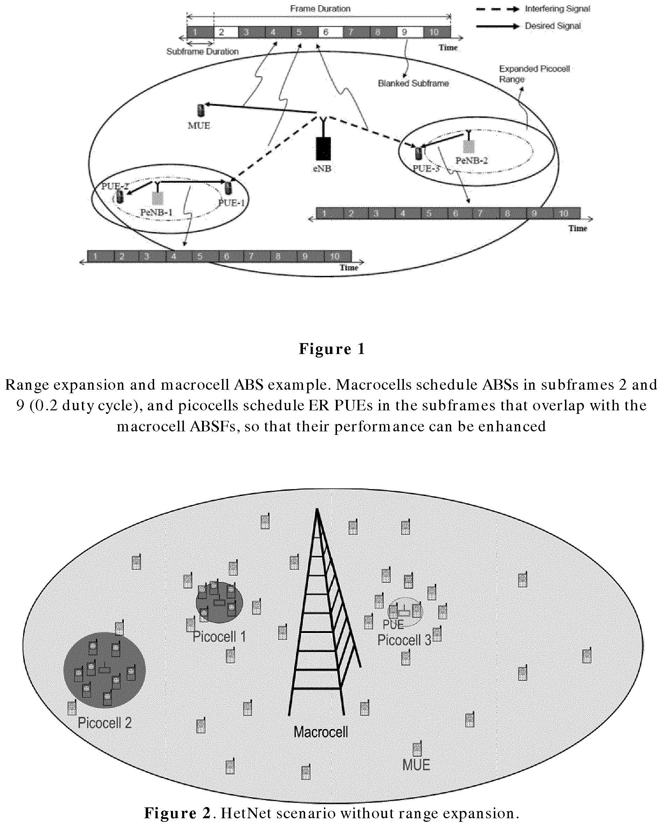

Figure 1 illustrates an example of an Almost Blank Subframe implementation between a macrocell and a small cell. The interference suffered by expanded region user equipment may be significantly alleviated by using a time domain enhanced Inter-Cell Interference Coordination (eICIC) method based on transmission of so-called "Almost Blank Subframes "(ABSs) by one or more macro cell base stations. Almost Blank Subframes are subframes, in which control information, but no user data, is sent. Since ABSs are light on user data, a large degree of DL interference mitigation can be achieved in the control and data regions of user equipment operating in an expanded region of a small cell base station by scheduling those expanded region user equipment within subframes overlapping with the Almost Blank Subframes of a macrocell. In order to enable efficient interference mitigation, ABS schemes can be implemented to adapt to different traffic loads and different numbers of small cells in a network, for example, at various geographical locations. Adaptive ABS schemes can be implemented in LTE networks and are enabled through X2 backhaul inter-base station coordination.

According to one example of an ABS scheme, a macro base station may be operable to inform one or more small cell base stations operating within its region of radio coverage of the subframes it will use for scheduling Macro UEs (MUEs) and which ones are Almost Blank Subframes. The specific ABS pattern to be used can be agreed in conjunction with macro base stations supporting neighboring cells. The ABS pattern may be described by a bitmap, where '1' indicates an Almost Blank Subframe and '0' indicates a non- Almost Blank Subframe.

In the example shown in Figure 1, a macrocell (eNB)is operable to schedule ABSs in subframes 2 and 9 (0.2 duty cycle), and small cells (in this instance, picocells, PeNB-1 &PeNB-2) are operable to schedule ER PUEs in the subframes that overlap with the macrocell ABSFs, so that their performance can be enhanced.

The larger the range expansion bias for a given small cell base station in a given position within a network, the more expanded region user equipment are forced to connect to such a small cell base station, and thus a larger ABS duty cycle can be implemented to provide a desired quality of service to expanded region user equipment. It will, however, be appreciated that the more Almost Blank Subframes that are scheduled by macrocells, the larger the duty cycle of ABS, and the lower the performance of macro cell user equipment due to resource blanking.

Overview

Before discussing the embodiments in any more detail, first an overview will be provided.

Aspects and embodiments may offer a method of choosing an appropriate ABS duty cycle, that is to say, a means to choose an appropriate ratio of ABS to non-ABS subframes scheduled, that ratio being chosen to take into account overall network performance for a given network. The "best" ratio for a given deployment being a result of parameters such as: base station locations, cell-specific range expansion biases, and similar.

Aspects and embodiments may provide a method to compute the number of Almost Blank Subframes that an umbrella macrocell should offer to its overlaid small cells, so that the performance of macro cell user equipment in a scenario with expanded region small cells is substatially the same, or controllably larger than, performance of macro cell user equipment in the same network deployment scenario without expanded region small cells. In order to make the most of the Almost Blank Subframes that the macrocells offer to small cells, some aspects and embodiments are such that each small cell base station, in each scheduling period, can perform a load balanced scheduling method such that the performance of the worst small cell users scheduled in subframes that do and do not overlap with the Almost Blank Subframes of the macrocell are equalized.

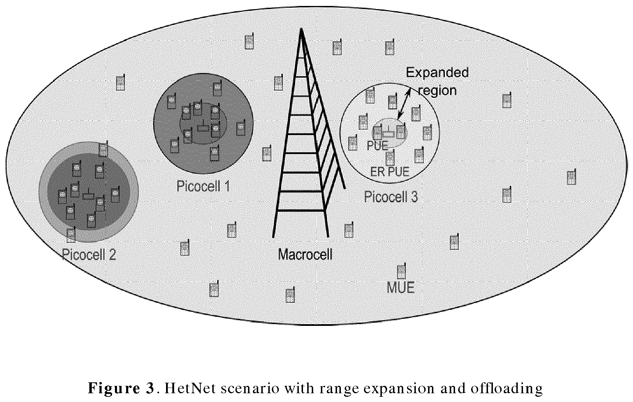

By way of example, consider two HetNet scenarios, which are further illustrated in Figure 2 and Figure 3, respectively. Figure 2 illustrates an example of a heterogeneous network in which range expansion is not implemented; In the illustrated example, picocells operate without range expansion. Figure 3 illustrates an example of a heterogeneous network in which range expansion and user offloading is implemented. In the illustrated example, picocells operate with range expansion, and thus a given number of user equipment (UEs) are offloaded from an umbrella macrocell to the "overlaid" picocells.

In the scenario shown in Figure 2, there are more Macro Cell user equipment (MUEs) than in the scenario shown in Figure 3. In Figure 3, some of the user equipment of the network have been offloaded to the small cells. In the scenario shown in Figure 2, the MUEs benefit from a larger number of subframes since in that scenario, there are no Almost Blank Subframes (ABSs).

Aspects and embodiments maybe operable to provide a method to compute the number of ABSs that an umbrella macrocell should offer to its overlaid picocells, given the specific picocell range expansion biases in a network deployment, such that the performance of the MUEs in the scenario illustrated in Figure 3 (picocells with range expansion) is the same or controllably larger than the performance of MUEs in a scenario illustrated ion Figure 2 (picocells without range expansion).

Use of a method in accordance with some aspects and embodiments described can allow a network to balance the conflicting requirements to provide a large number of ABSs to small cells operating in a network, while providing continued performance to macro cell user equipment. Aspects and embodiments may offer an improved overall network throughput due to better spatial reuse.

In order to make the most of the Almost Blank Subframes that the macrocells offer to small cells, some aspects and embodiments are such that each small cell base station, in each scheduling period, can perform a load balanced scheduling method such that the performance of the worst small cell users scheduled in subframes that do and do not overlap with the Almost Blank Subframes of the macrocell are equalized.

## ABS duty cycle

In a first scenario (such as that shown in Figure 2), there is one macrocell and three picocells that operate without range expansion. Both the macrocell tier and the picocell tier reuse the same time and frequency resources (co-channel deployment).

The set of picocells is denoted by

$\mathbf{P} = \{P_1, .., P_p, ...P_P\}$ with P=3 (as shown in Figure 2 and Figure 3).

The set of macrocell user equipment (MUEs) is denoted by

$\mathbf{MUE} = \{MUE_1, .., MUE_m, ...MUE_M\}$ and its cardinality is given by M.

The set of small cell user equipment (PUEs) of picocell $P_p$ is denoted by

$\mathbf{PUE}_p = \{PUE_1, .., PUE_i, ...PUE_{Ip}\}$ and its cardinality by $I_p$.

In the illustrated example, the network has S subframes and K Resource Blocks (RBs).

The set of subframes and RBs are denoted by S = {1, .., s, ...S} and

$\mathbf{K} = \{1, .., k, ...K\}$, respectively.

In a second scenario (such as that shown in Figure 3), there are the same cells as in Scenario 1, but the three picocells operate with a given range expansion bias. That reange expansion bias does not need to be necessarily the same for all picocells. Typically the range expansion bias for each picocell will be known and will have been selected according to some specific strategy (for example, covering hot spot user equipment). According to a scenario such as that shown in Figure 3:

The new set of MUEs is denoted by:

$$\mathbf{MUE'} = \{MUE'_1, .., MUE'_{m'}, ...MUE'_{M'}\} \text{ and its cardinality by } M'.$$

The set of PUEs of picocell $P_p$ located outside the "expanded region" coverage (in other words, in the nominal or primitive coverage area of a picocell) and naturally allocated to non ABS is denoted by:

$$\mathbf{PUE_p^{nonABS}} = \{PUE'_1, .., PUE'_x, ...PUE'_{Xp}\} \text{ and its cardinality by } X_p.$$

The new set of PUEs of picocell $P_p$ located in the expanded region coverage and naturally allocated to ABS is denoted by:

$$\mathbf{ERPUE_p^{ABS}} = \{ERPUE_1, .., ERPUE_y, ...ERPUE_{Yp}\} \text{ and its cardinality by } Y_p.$$

Given those two scenarios it is possible to identify the following relationships:

$$\mathbf{PUE_p} = \mathbf{PUE_p^{nonABS}}$$

The use of range expansion does not change the set of PUEs served by a picocell in its inner region, i.e., outside the expanded region coverage.

$$\mathbf{MUE} = \mathbf{MUE'} \cup \mathbf{ERPUE_p}^{\mathbf{ABS}} \text{ for all } p \text{ in } \mathbf{P}$$

The set of MUEs in scenario 1 is split into UEs that remain attached to the macrocell, i.e., MUEs, and UEs that are offloaded to the picocells due to range expansion, i.e., ERPUEs.

It is possible to compute a duty cycle of Almost Blank Subframes, $D_{ABS}$, which an umbrella macrocell should offer to its overlaid small cells, given their small cell specific range expansion biases, so that the performance of **MUE'** in scenario 2 is the same or controllably larger than the performance of **MUE** in scenario 1.

In order to perform such a calculation:

The ratio of subframes-to-MUEs in scenario 1 is defined as $= \frac{K}{M}$, where this ratio can be controlled by a multiplying factor $\alpha$ such that $R_\alpha = \alpha R = \alpha \frac{K}{M}$ (where $\alpha$ is a parameter that allows a network to control MUE performance, as shown below).

The ratio of subframes-to-MUEs in scenario 2 is defined as $' = \frac{K-K'}{M'}$, where $K' \leq K$ is the number of ABSs that the umbrella macrocell offers to its picocells and

$$M' = M - \sum_{k=0}^{p} Y_{p}.$$

The duty cycle of ABSs can be calculated according to:

$$D_{ABS} = \frac{K-K'}{K} = 1 - \alpha + \alpha \frac{\sum_{k=0}^{p} Y_p}{M} \qquad (1),$$

where

$\alpha = 1$, if the network wants to offer the same performance to MUEs in scenario 2 as in scenario 1 (with and without range expansion), and

$\alpha = \dfrac{1}{1 - \dfrac{\sum_{k=0}^{p} Y_p}{M}}$ is the maximum value that $\alpha$ can take, representing an scenario where no ABSs are scheduled and thus the MUE performance is maximized.

As a result, $\alpha \in \left[1, \dfrac{1}{1 - \dfrac{\sum_{k=0}^{p} Y_p}{M}}\right]$.

In a typical network deployment, all macrocells in a set of neighbouring macrocells are operable to use the same duty cycle and pattern of ABSs, $D_{ABS}$, in order to mitigate inter-cell interference issues. As a result, in some embodiments, a set of macrocells may be operable to coordinate and select a shared duty cycle and pattern of ABSs according to a group policy, for example, a choice may be made as the maximum $D_{ABS}$ of all macrocells, or the average $D_{ABS}$ of all macrocells in a group.

Load balancing

User equipment load and traffic conditions may change faster than the ability of a network to update the duty cycle of ABS in a given deployment. Furthermore, different small cells operating under one umbrella macrocell may have different UE load and traffic in their core or "nominal" coverage region and expanded region of coverage. Accordingly, some aspects and embodiments described herein relate to a load balancing mechanism that can operate independently in each small cell. The load balancing mechanism may target avoidance of the misuse, be it underutilization or overutilization, of the subframes used by the small cells in their "expansion region". That is to say, those subframes which overlap with the Almost Blank Subframes scheduled at macrocells.

By way of example, Figure 3 illustrates schematically a scenario in which a macrocell has a duty cycle of ABS, picocell 1 has 5 PUEs and 5 ERPUEs, while picocell 2 has 9 PUEs and 1 ERPUE. In such a scenario, it could be advantageous that in picocell 2, some PUEs are scheduled in subframes overlapping with the ABS scheduled at macrocells, since that ABS resource could be more efficiently used by some user equipment in the core coverage region rather than just the single expansion region user equipment. In other words, the small cell may choose to implement a scheme which offers a degree of load balancing between core region and expansion region user equipment. The reverse situation, where some expansion region user equipment are scheduled in subframes which do not overlap with the ABS scheduled at macrocells, may also be beneficial in some scenarios. However, in such an implementation of load balancing, it is important to ensure that offloaded UEs from subframes overlapping with ABS to subframes not overlapping with ABS do not suffer from such poor control channel performance that they lose synchronization with the serving small cell.

It will be appreciated that when the number of scheduling realizations is sufficiently large, the performance of a proportional fair scheduler tends to be equivalent to that of a round robin scheduler. Thus a round robin scheduler can be assumed in calculations, which gives a long-term perspective and the possibility of making fast calculations that can be updated regularly.

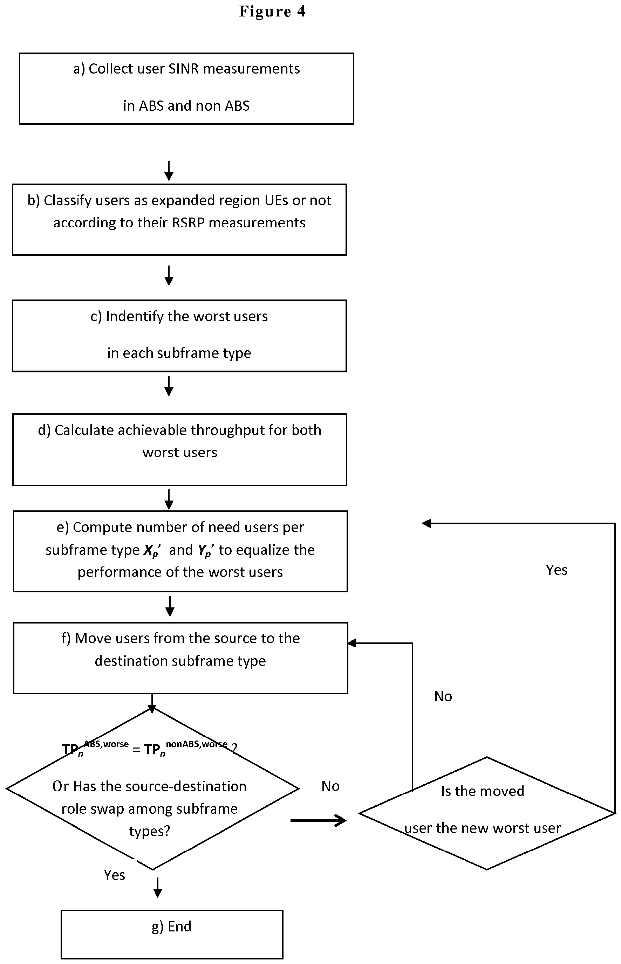

Figure 4 is a flow chart illustrating one possible implementation of a load balancing algorithm to be implemented by a small cell. In Figure 4

Let:

$$\mathbf{U}_p = \{\mathrm{U}_1, \ldots \mathrm{U}_n \ldots \mathrm{U}_N\} \text{ denote a set of users connected to a picocell } P_p,$$

where $U_p = \mathbf{PUE_p^{nonABS}} \cup \mathbf{ERPUE_p^{ABS}}$, being N the total number of users ($N = X_p + Y_p$) and $U_n$ one element of the set. Let $\mathbf{SINR}_n = \{SINR_n^{ABS}, SINR_n^{nonABS}\}$ denote wideband signal to noise plus interference ratio (SINR) of user $U_n$ in the subframes overlapping with ABS and subframes not overlapping with ABS, respectively.

The method illustrated in Figure 4 comprises the following steps:

a. First, the picocell is operable to estimate for each of its users, $\mathbf{U}_n$, a user wideband SINR in the subframes overlapping with ABS and subframes not overlapping with ABS. $\mathbf{SINR}_n = \{\mathbf{SINR}_n^{ABS}, \mathbf{SINR}_n^{nonABS}\}$

b. Based on RSRP measurements, the picocell is operable to classify users as expanded region users $\mathbf{ERPUE_p^{ABS}}$ = {ERPUE$_1$, .., ERPUE$_y$, ...ERPUE$_{Yp}$} and non expanded region users $\mathbf{PUE_p^{nonABS}}$ = {PUE'$_1$, .., PUE'$_x$, ...PUE'$_{Xp}$}, where $Y_p$ is the total number of users in the picocell expanded region, and $X_p$ is the total number of users in the picocell core coverage region. After such user classification, the picocell is operable to 'store' classified users in an "expanded region user queue" and a "non-expanded region user queue".

c. Thereafter, the picocell is operable to identify, based on their wideband SINR measurements, a worst expanded region user $\mathbf{U}_n^{\mathbf{ABS,worse}}$ and a worst non expanded region user $\mathbf{U}_n^{\mathbf{nonABS,worse}}$.

d. The picocell is then operable to estimate the user throughput $\mathbf{TP}_n^{\mathbf{ABS,worse}}$ $\mathbf{TP}_n^{\mathbf{nonABS,worse}}$ for both worst users $\mathbf{U}_n^{\mathbf{ABS,worse}}$ $\mathbf{U}_n^{\mathbf{nonABS,worse}}$. That throughput is calculated as if the worst users were allocated to all RBs handled by the subframes overlapping with ABS and subframes not overlapping with ABS, respectively. Such a computation is straightforward since a picocell will typically be aware of the user wideband SINR in each subframe if it has instructed users to take such measurements. $\mathbf{TP}_n^{\mathbf{ABS,worse}} = f(SINR_n^{ABS}) \mathbf{K}$ and $\mathbf{TP}_n^{\mathbf{nonABS,worse}} = \mathbf{f(SINR}_n^{\mathbf{nonABS})}$ $\mathbf{K,}$ where $\mathbf{f(x)}$ is a mapping function that translates RB SINR into RB throughput and $\mathbf{K}$ is the total number of RBs.

e. Once the achievable throughput of both worst users is estimated and assuming a round robin scheduler, it is possible to compute how many users there should be in each subframe type so that the worse users roughly achieve the same throughput performance. This can be easily computed due to the round robin scheduler properties:

$$\begin{cases} X'_p + Y'_p = N \\ \dfrac{TP_n^{nonABS,worse}}{x'_p} = \dfrac{TP_n^{ABS,worse}}{Y'_p} \end{cases}$$

$$\downarrow$$

$$\begin{cases} X'_p = N - Y'_p \\ Y'_p = \dfrac{N}{1 + \dfrac{TP_n^{nonABS,worse}}{TP_n^{ABS,worse}}} \end{cases}$$

where $Y_p$' and $X_p$' are the total number of users that there should be in the subframes overlapping with ABS and subframes not overlapping with ABS, respectively to achieve the targeted load balancing

f. The picocell may then be operable to move users from a source subframe type queue to a destination subframe type queue, until the number of desired users in each subframe type is achieved.
When moving a user from non-ABS to ABS overlapping subframes, and because the performance of such a user will always improve due to ABS interference mitigation, the picocell may be operable to first move the worst performing user in the non ABS overlapping subframes. Such an approach targets maximizing worst user performance.
However, when moving a user from the ABS to the non ABS overlapping subframes, because the performance of this user will always decrease due to macrocell interference, the picocell may be operable to move the best performing user subject to the following constraint: all users using non ABS subframes should be able to decode control channels; otherwise the user is not moved. In other words, all users using non ABS should have a wideband SINR higher than an out-of-synchronization threshold.
If, when the picocell moves one user from one queue to the other, that user becomes the worst user in the new queue, then the picocell may be operable to re-compute how many users there should be in each subframe type according to step e), and then continue with step f).

g. The algorithm stops when the number of desired users per subframe type is achieved, or when the picocell begins to move users from the ABS to the non ABS overlapping subframes, when in the previous iteration it was moving users in the opposite direction, from the non ABS to the ABS overlapping subframes, or vice versa.

Performance comparison

System-level simulations have been performed in relation to the following LTE deployments to compare performance of: Picocells with no bias and macrocells with no ABSs; Picocells with bias and macrocells with no ABSs; Picocells with bias, and macrocells with a duty cycle of ABSs $D_{ABS}$ = 0.5, and no load balancing; Picocells with bias, and macrocells with a duty cycle of ABSs $D_{ABS}$ = 0.5, but with proposed load balancing; Picocells with bias, and macrocells with a duty cycle of ABSs computed according to an alternative ABS selection algorithm and load balancing; and Picocells with bias, and macrocells with a duty cycle of ABSs computed according to one aspect, and load balancing. Moreover, different $\alpha$ values are used to show the effects of this parameter.

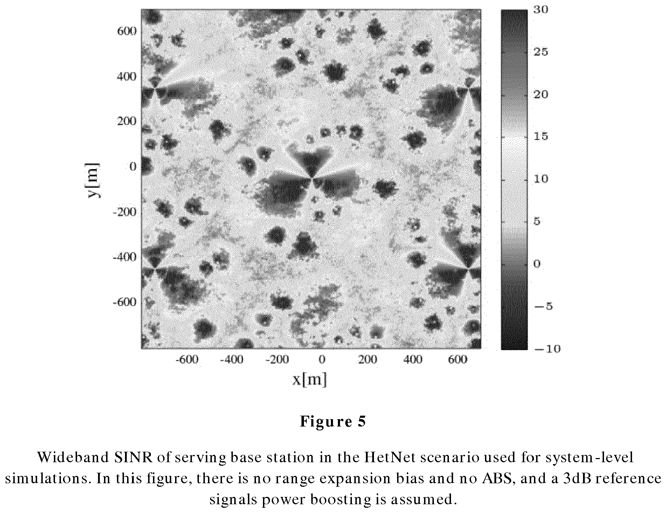

Figure 5 illustrates an example of wideband SINR of a set of base stations used for system level simulations of some aspects and embodiments. In the network of Figure 5, there are 21 macrocell sectors and a random deployment of 4 hot spots of 40m radius per macrocell sector, each one of them covered by a picocell located in its centre. All system-level simulation results are given for deployments with 1 LTE carrier centered at 2GHZ and with 5MHz bandwidth.
In the simulations shown in later Figures a range expansion bias per picocell was adopted which allowed each picocell to cover the hot spot with 40m radius. The scheduling scheme used was proportional fair.

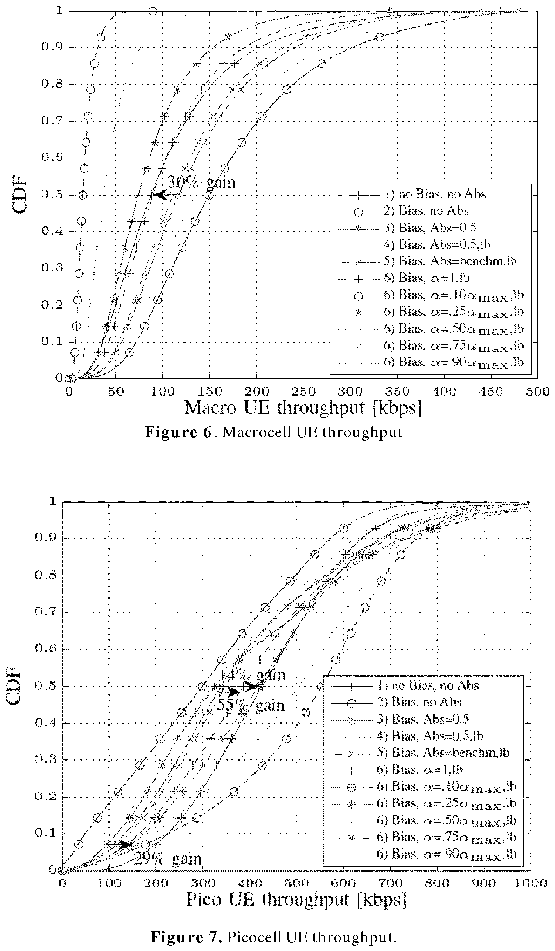

Figure 6 illustrates schematically Macrocell user equipment throughput according to a range of simulations. In particular, Figure 6 presents graphically an indication of the cumulative distribution function of the Macrocell User Equipment (MUE) throughput. The simulation of an implementation with bias and no ABS (solid black line) provides the best MUE performance, since some MUEs are offloaded to picocells and the macrocells are still allowed to use all subframes (no blanking of subframes). It can also be seen that adopting load balancing techniques such as those described herein in some aspects and embodiments at picocells (balancing load between ABS and non ABS overlapping subframes for user equipment in the expanded and core regions of coverage) does not affect MUE performance: The case with bias and 0.5 duty cycle of ABSs with and without the proposed load balancing perform substantially identically. When using the proposed ABS duty cycle selection approach according to aspects and embodiments, and when $\alpha$ = 1, the graph of Figure 6 shows that performance of MUEs is approximately the same as when using no bias and no ABS. This is, of course, an aim of such an embodiment, and thus simulations validate the method used to select an ABS duty cycle according to some embodiments. Figure 6 also illustrates that, when using the proposed ABS duty cycle selection approach according to an embodiment, it is possible, by changing $\alpha$, to tune expected MUE performance: When $\alpha$ is large, the MUE throughput is increased and when it is small, the MUE throughput is decreased. Thus, $\alpha$ provides a simple and flexible way to tune and control MUE performance.

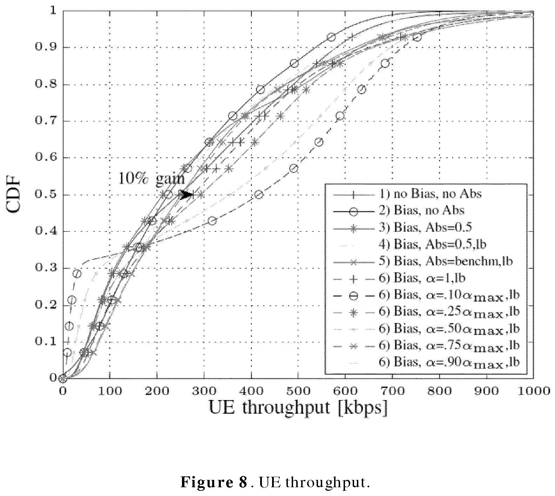

Use of an alternative method to compute a duty cycle of ABSs in these simulations results in the choice of a smaller duty cycle of ABS than one according to aspects and embodiments in which $\alpha = 1$. As a result, MUE 50 percentile performance is 30% larger that when selecting an ABS duty cycle in accordance with aspects described herein, that increase being at the expense of both a reduced small cell user equipment throughput performance and at the expense of overall network capacity as is illustrated in Figures 7 and 8.

Figure 7 presents the cumulative distribution function of picocell user equipment throughput. The simulation of a scenario in which expansion bias and no ABS is implemented across a network (which provided the best MUE performance) provides the worst PUE performance, since more PUEs are captured by picocells (due to range expansion) and the macrocells are allowed to use all subframes (no interference mitigation). This is a general trend confirmed across simulation results for the different cases: enhancing PUE performances reduces MUE performance and vice versa. For example, Figure 7 also shows that increasing the duty cycle of ABS through $\alpha$ increases PUE throughput but decreases MUE throughput. With regard to load balancing, adopting the proposed load balancing at the picocells (between ABS and non ABS overlapping subframes) significantly enhances PUE performance. Comparison of the simulations of an implementation with bias and 0.5 duty cycle of ABSs with and without the proposed load balancing, the PUE 5 percentile and 50 percentile performance increases by 55% and 29%, respectively. As described above, use of an alternative method to compute a duty cycle of ABSs in these simulations results in the choice of a smaller duty cycle of ABS than one according to aspects and embodiments in which $\alpha = 1$.

The simulation results show that the PUE 50 percentile performance is 14% larger in the latter case at the expense, as indicated before, of a MUE 50%percentile performance which is 30% smaller. However, in terms of overall UE satisfaction and network capacity, since the number of PUEs is larger than the number of MUEs, the 14% PUE capacity gain is more valuable than the 30 % MUE capacity loss, as it will be shown in Figure 8.

Figure 8 presents a cumulative distribution function of total UE throughput. This figure allows easy observation of previous trends and derivation of previous conclusions. It can, for example, be seen that when comparing a method in accordance with proposed aspects and embodiments to compute a suitable duty cycle of ABSs to alternative ABS selection algorithms, the overall UE 50percentile performance is 10% larger, thus confirming that due to the larger number of PUEs, the 14% PUE capacity gain more than compensates for the 30% MUE loss and results in an improved overall UE satisfaction and network capacity.

Extensions

Some aspects and embodiments described can be extended, for example: some aspects and embodiments may be used to realise a duty cycle of ABSs calculation that is aware of specific UE traffic demands. In this case, instead of considering the ratio ER PUEs to MUEs plus ER PUEs (i.e., $\dfrac{\sum_{k=0}^{p} Y_p}{M}$), the method can be extended to consider the ratio of demanded ER PUE throughput to demanded MUE throughput plus demanded ER PUE throughput. Furthermore, aspects and embodiments may be used to realize different load balancing strategies amongst ABS to non-ABS overlapping subframes. In this case, instead of equalizing the performance of worst users, it is possible to target, for example, a balance of average or median performance of users in both subframes types. Techniques according to some aspects and embodiments maybe used to take into account power reduced subframes, rather than almost blank subframes.

Summary

Control of selection of a duty cycle of ABSs and enabling load balancing in accordance with some aspects and embodiments can result in more efficient small cell user offloading in a HetNet scenario, that offloading occurring with a controlled MUE performance. Aspects and embodiments may allow for better load balancing and use of resources. Simulations set out above demonstrate a 55% and 29% small cell user equipment 5 percentile and 50 percentile performance improvement, respectively when using load balancing in accordance with one embodiment. Simulations set out above demonstrate a 14% small cell user equipment 50 percentile performance improvement when comparing an alternative ABS selection method and an approach in accordance with one embodiment in which $\alpha = 1$. Simulations set out above demonstrate a 10% overall UE 50 percentile performance improvement when comparing an alternative ABS selection method and an approach in accordance with one embodiment in which $\alpha = 1$. Aspects and embodiments may require a slight increase in network computing complexity due to the need to implement ABS duty cycle selection and load balancing computations, but the benefits may outweigh this very minor drawback.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function maybe carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be subase stationtantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. A method of controlling operation of a heterogeneous communication network comprising user equipment, a macro cell base station supporting a macro region of radio coverage and at least one small cell base station supporting a small cell region of radio coverage which overlaps with said macro region of radio coverage, said user equipment being operable to communicate with either of said macrocell base station and said at least one small cell base station and wherein said macrocell is operable to release a proportion of available resource for facilitating communication between said user equipment and said at least one small cell base station; said method comprising:

   determining which of said user equipment are attached to said macro base station in a first scenario in which said macro base station and small cell base station reuse the same available time and frequency resource and establishing an indication of said available resource available to user equipment attached to said macro cell base station in said first scenario;
   determining which of said user equipment are attached to said macro base station in a second scenario in which some of said user equipment have been offloaded to said at least one small cell base station and selecting a proportion of said available resource to release by said macro cell base station for facilitating communication between said offloaded user equipment and said at least one small cell base station such that available resource available to user equipment which remains attached to said macro cell base station in said second scenario is at least equivalent to the established indication of said available resource available to user equipment attached to said macro cell base station in said first scenario.

**2.** A method according to claim 1, wherein said released proportion of available resource comprises almost blank subframes transmitted by said macro base station, thereby releasing those subframes for facilitating communication between offloaded user equipment and said at least one small cell base station.

**3.** A method according to claim 1, wherein said released proportion of available resource comprises reduced power subframes transmitted by said macro base station, thereby essentially releasing those subframes for facilitating communication between offloaded user equipment and said at least one small cell base station.

**4.** A method according to any preceding claim, wherein establishing an indication of said available resource available to user equipment attached to said macro cell base station in said first scenario and available resource available to user equipment which remains attached to said macro cell base station in said second scenario comprises: establishing an indication of available resource to traffic load of said user equipment.

**5.** A computer program product operable, when executed on a computer, to perform the method of any one of claims 1 to 4.

**6.** A network control node operable to control operation of a heterogeneous communication network comprising user equipment, a macro cell base station supporting a macro region of radio coverage and at least one small cell base station supporting a small cell region of radio coverage which overlaps with said macro region of radio coverage, said user equipment being operable to communicate with either of said macrocell base station and said at least one small cell base station and wherein said macrocell is operable to release a proportion of available resource for facilitating communication between said user equipment and said at least one small cell base station; said network control node comprising:

> determination logic operable to determine which of said user equipment are attached to said macro base station in a first scenario in which said macro base station and small cell base station reuse the same available time and frequency resource and to establish an indication of said available resource available to user equipment attached to said macro cell base station in said first scenario;
> said determination logic being further operable to determine which of said user equipment are attached to said macro base station in a second scenario in which some of said user equipment have been offloaded to said at least one small cell base station and
> selection logic operable to select a proportion of said available resource to release by said macro cell base station for facilitating communication between said offloaded user equipment and said at least one small cell base station such that available resource available to user equipment which remains attached to said macro cell base station in said second scenario is at least equivalent to the established indication of said available resource available to user equipment attached to said macro cell base station in said first scenario.

**Patentansprüche**

**1.** Verfahren zur Steuerung des Betriebs eines heterogenen Kommunikationsnetzwerks, umfassend Teilnahmegeräte, eine Makrozellenbasisstation, die eine Makroregion von Funkabdeckung unterstützt und mindestens eine Kleinzellenbasisstation, die eine Kleinzellenregion von Funkabdeckung unterstützt, die mit besagter Makroregion von Funkabdeckung überlappt, wobei besagte Teilnahmegeräte betreibbar sind für die Kommunikation entweder mit besagter Makrozellenbasisstation oder mit besagter mindestens einen Kleinzellenbasisstation und wobei besagte Makrozelle betreibbar ist zur Freigabe eines Anteils einer verfügbaren Ressource zur Erleichterung der Kommunikation zwischen besagten Teilnahmegeräten und besagter mindestens einen Kleinzellenbasisstation; besagtes Verfahren umfasst: Bestimmen, welche besagter Teilnahmegeräte an besagter Makrobasisstation in einem ersten Szenarium angebracht sind, in welchem besagte Makrobasisstation und Kleinzellenbasisstation dieselbe verfügbare Zeit- und Frequenzressource wiederverwenden, und Bestimmung einer Angabe besagter verfügbarer Ressource, die verfügbar ist für Teilnahmegeräte, die an besagter Makrozellbasisstation in besagtem ersten Szenarium angebracht sind;
Bestimmen, welche besagter Teilnahmegeräte an besagter Makrobasisstation in einem zweiten Szenarium angebracht sind, in dem einige besagter Teilnahmegeräte entladen worden sind auf besagte mindestens eine Kleinzellenbasisstation, und Auswählen eines Anteils besagter verfügbarer Ressource zur Freigabe mittels besagter Makrozellbasisstation für die Erleichterung der Kommunikation zwischen besagten entladenen Teilnahmegeräten und besagter mindestens einen Kleinzellenbasisstation, sodass die verfügbare Ressource, die verfügbar ist für Teilnahmegeräte, die an besagter Makrozellbasisstation angebracht bleiben in besagtem zweiten Szenarium, mindestens äquivalent ist zur bestimmten Angabe besagter verfügbarer Ressource, die verfügbar ist für Teilnahmegeräte, die angebracht sind an besagter Makrozellbasisstation in besagtem ersten Szenario.

2. Verfahren nach Anspruch 1, wobei besagter freigegebener Anteil an verfügbarer Ressource fast leere Unterrahmen umfasst, die von besagter Makrobasisstation übertragen werden, wobei diese Unterrahmen freigegeben werden für die Erleichterung der Kommunikation zwischen den entladenen Teilnahmegeräten und besagter mindestens einen Kleinzellenbasisstation.

3. Verfahren nach Anspruch 1, wobei besagter freigegebener Anteil verfügbarer Ressource Unterrahmen mit reduzierter Leistung umfasst, die von besagter Makrobasisstation übertragen werden, wobei im Wesentlichen diese Unterrahmen freigegeben werden für die Erleichterung der Kommunikation zwischen entladenen Teilnahmegeräten und besagter mindestens einen Kleinzellenbasisstation.

4. Verfahren nach einem beliebigen der vorhergehenden Ansprüche, wobei die Bestimmung einer Angabe besagter verfügbarer Ressource, die verfügbar ist für Teilnahmegeräte, die an besagter Makrozellbasisstation in besagtem ersten Szenario angebracht sind, und verfügbarer Ressource, die verfügbar ist für Teilnahmegeräte, die an besagter Makrozellbasisstation in besagtem zweiten Szenario angebracht bleiben, umfassend: Bestimmen einer Angabe verfügbarer Ressource für die Verkehrslast besagter Teilnahmegeräte.

5. Ein Computerprogrammprodukt betreibbar bei Ausführung auf einem Computer für die Durchführung des Verfahrens nach einem beliebigen der Ansprüche 1 bis 4.

6. Netzwerksteuerknoten, betreibbar für die Steuerung des Betriebs eines heterogenen Kommunikätionsnetzwerks, umfassend Teilnahmegeräte, eine Makrozellbasisstation, die eine Makroregion von Funkabdeckung unterstützt, und mindestens eine Kleinzellenbasisstation, die eine Kleinzellenregion von Funkabdeckung unterstützt, die mit besagter Makroregion von Fuhkabdeckung überlappt, wobei besagte Teilnahmegeräte betreibbar sind für die Kommunikation entweder mit besagter Makrozellenbasisstation oder mit besagter mindestens einen Kleinzellenbasisstation und wobei besagte Makrozelle betreibbar ist zur Freigabe eines Anteils einer verfügbaren Ressource zur Erleichterung der Kommunikation zwischen besagten Teilnahmegeräten und besagter mindestens einen Kleinzellenbasisstation; wobei besagter Netzwerksteuerknoten umfasst:

Bestimmungslogik, betreibbar zum Bestimmen, welche besagter Teilnahmegeräte an besagter Makrobasisstation in einem ersten Szenario angebracht sind, in welchem besagte Makrobasisstation und Kleinzellenbasisstation dieselbe verfügbare Zeit-und Frequenzressource wiederverwenden, und zum Bestimmen einer Angabe besagter verfügbarer Ressource, die verfügbar ist für Teilnahmegeräte, die an besagter Makrozellbasisstation in besagtem erstem Szenario angebracht sind;
besagte Bestimmungslogik weiterhin betreibbar zum Bestimmen, welche besagter Teilnahmegeräte angebracht sind an besagter Makrobasisstation in einem zweiten Szenario, in dem einige besagter Teilnehmergeräte entladen worden sind auf besagte mindestens eine Kleinzellenbasisstation und
Auswahllogik, betreibbar zur Auswahl eines Anteils besagter verfügbarer Ressource zur Freigabe durch besagte Makrozellbasisstation für die Erleichterung der Kommunikation zwischen besagten entladenen Teilnahmegeräten und besagter mindestens einen Kleinzellenbasisstation, sodass die verfügbare Ressource, die verfügbar ist für Teilnahmegeräte, die an besagter Makrozellbasisstation angebracht bleiben in besagtem zweiten Szenario, mindestens äquivalent ist zur bestimmten Angabe besagter verfügbarer Ressource, die verfügbar ist für Teilnahmegeräte, die angebracht sind an besagter Makrozellbasisstation in besagtem ersten Szenario.

## Revendications

1. Procédé de commande de fonctionnement d'un réseau de communication hétérogène comprenant des équipements d'utilisateur, une station de base de macro cellule supportant une région macro de couverture radio et au moins une station de base de petite cellule supportant une région de petite cellule de couverture radio qui se chevauche avec ladite région macro de couverture radio, lesdits équipements d'utilisateur étant exploitables pour communiquer avec l'une ou l'autre de ladite station de base de macrocellule et dé ladite au moins une station de base de petite cellule et dans lequel ladite macrocellule est exploitable pour libérer une proportion de ressource disponible pour faciliter la communication entre lesdits équipements d'utilisateur et ladite au moins une station de base de petite cellule ; ledit procédé comprenant les étapes suivantes :

déterminer lesquels desdits équipements d'utilisateur sont rattachés à ladite station de base macro dans un premier scénario dans lequel ladite station de base macro et ladite station de base de petite cellule réutilisent la même ressource de temps et de fréquence disponible et établir une indication de ladite ressource disponible disponible pour des équipements d'utilisateur rattachés à ladite station de base de macro cellule dans ledit premier scénario ;

déterminer lesquels desdits équipements d'utilisateur sont rattachés à ladite station de base macro dans un second scénario dans lequel certains desdits équipements d'utilisateur ont été déchargés vers ladite au moins une station de base de petite cellule et sélectionner une proportion de ladite ressource disponible à libérer par ladite station de base de macro cellule pour faciliter la communication entre lesdits équipements d'utilisateur déchargés et ladite au moins une station de base de petite cellule de sorte qu'une ressource disponible disponible pour des équipements d'utilisateur qui.restent rattachés à ladite station de base de macro cellule dans ledit second scénario soit au moins équivalente à l'indication établie de ladite ressource disponible disponible pour des équipements d'utilisateur rattachés à ladite station de base de macro cellule dans ledit premier scénario.

2. Procédé selon la revendication 1, dans lequel ladite proportion libérée de ressource disponible comprend des sous-trames presque vierges transmises par ladite station de base macro, libérant ainsi ces sous-trames pour faciliter la communication entre des équipements d'utilisateur déchargés et ladite au moins une station de base de petite cellule.

3. Procédé selon la revendication 1, dans lequel ladite proportion libérée de ressource disponible comprend des sous-trames à puissance réduite transmises par ladite station de base macro, libérant ainsi essentiellement ces sous-trames pour faciliter la communication entre des équipements d'utilisateur déchargés et ladite au moins une station de base de petite cellule.

4. Procédé selon l'une quelconque des revendications précédentes, dans lequel l'établissement d'une indication de ladite ressource disponible disponible pour des équipements d'utilisateur rattachés à ladite station de base de macro cellule dans ledit premier scénario et d'une ressource disponible disponible pour des équipements d'utilisateur qui restent rattachés à ladite station de base de macro cellule dans ledit second scénario comprend l'étape suivante: établir une indication de ressource disponible pour une charge de trafic desdits équipements d'utilisateur.

5. Produit de programme informatique exploitable, lorsqu'il est exécuté sur un ordinateur, pour effectuer le procédé de l'une quelconque des revendications 1 à 4.

6. Noeud de commande de réseau exploitable pour commander le fonctionnement d'un réseau de communication hétérogène comprenant des équipements d'utilisateur, une station de base de macro cellule supportant une région macro de couverture radio et au moins une station de base de petite cellule supportant une région de petite cellule de couverture radio qui se chevauche avec ladite région macro de couverture radio, lesdits équipements d'utilisateur étant exploitables pour communiquer avec l'une ou l'autre de ladite station de base de macrocellule et de ladite au moins une station de base de petite cellule et dans lequel ladite macrocellule est exploitable pour libérer une proportion de ressource disponible pour faciliter la communication entre lesdits équipements d'utilisateur et ladite au moins une station de base de petite cellule ; ledit noeud de commande de réseau comprenant :

une logique de détermination exploitable pour déterminer lesquels desdits équipements d'utilisateur sont rattachés à ladite station de base macro dans un premier scénario dans lequel ladite station de base macro et ladite station de base de petite cellule réutilisent la même ressource de temps et de fréquence disponible et pour établir une indication de ladite ressource disponible disponible pour des équipements d'utilisateur rattachés à ladite station de base de macro cellule dans ledit premier scénario ;

ladite logique de détermination étant en outre exploitable pour déterminer lesquels desdits équipements d'utilisateur sont rattachés à ladite station de base macro dans un second scénario dans lequel certains desdits équipements d'utilisateur ont été déchargés vers ladite au moins une station de base de petite cellule et

une logique de sélection exploitable pour sélectionner une proportion de ladite ressource disponible à libérer par ladite station de base de macro cellule pour faciliter la communication entre lesdits équipements d'utilisateur déchargés et ladite au moins une station de base de petite cellule de sorte qu'une ressource disponible disponible pour des équipements d'utilisateur qui restent rattachés à ladite station de base de macro cellule dans ledit second scénario soit au moins équivalente à l'indication établie de ladite ressource disponible disponible pour des équipements d'utilisateur rattachés à ladite station de base de macro cellule dans ledit premier scénario.

**Figure 1**

Range expansion and macrocell ABS example. Macrocells schedule ABSs in subframes 2 and 9 (0.2 duty cycle), and picocells schedule ER PUEs in the subframes that overlap with the macrocell ABSFs, so that their performance can be enhanced

**Figure 2**. HetNet scenario without range expansion.

**Figure 3**. HetNet scenario with range expansion and offloading

## Figure 4

a) Collect user SINR measurements

in ABS and non ABS

$\downarrow$

b) Classify users as expanded region UEs or not according to their RSRP measurements

$\downarrow$

c) Indentify the worst users

in each subframe type

$\downarrow$

d) Calculate achievable throughput for both worst users

$\downarrow$

e) Compute number of need users per subframe type $X_p{'}$ and $Y_p{'}$ to equalize the performance of the worst users

$\downarrow$

f) Move users from the source to the destination subframe type

$TP_n^{ABS,worse} = TP_n^{nonABS,worse}$ ?

Or Has the source-destination role swap among subframe types?

No

Is the moved user the new worst user

Yes

No

Yes

g) End

**Figure 5**

Wideband SINR of serving base station in the HetNet scenario used for system-level simulations. In this figure, there is no range expansion bias and no ABS, and a 3dB reference signals power boosting is assumed.

**Figure 6.** Macrocell UE throughput

**Figure 7.** Picocell UE throughput.

**Figure 8**. UE throughput.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012188884 A

- US 2013045740 A